# EUROPEAN PATENT APPLICATION

(11) **EP 4 509 878 A1**
(43) Date of publication of application: **19.02.2025**
(21) Application number: 23893155.4
(22) Date of filing: 29.06.2023
(51) Int. Cl.: G01S 17/89

(54) **LASER RADAR POINT CLOUD PROCESSING METHOD AND APPARATUS**

(30) Priority: 25.11.2022 CN 202211497989
(71) Applicant: Huawei Technologies Co., Ltd., Shenzhen, Guangdong 518129 (CN)
(72) Inventor: CHEN, Jie, Shenzhen, Guangdong 518129 (CN); YU, Yongyi, Shenzhen, Guangdong 518129 (CN); HAN, Liuyang, Shenzhen, Guangdong 518129 (CN); RONG, Zihao, Shenzhen, Guangdong 518129 (CN); WU, Xiaojun, Shenzhen, Guangdong 518129 (CN); CHEN, Min, Shenzhen, Guangdong 518129 (CN)
(74) Representative: Pfenning, Meinig & Partner mbB
(86) International application number: PCT/CN2023/104076
(87) International publication number: WO 2024/109055

(57) **Abstract**

This application provides a lidar point cloud processing method and apparatus. The method includes: obtaining a to-be-processed point cloud and a reference gray image corresponding to a radar field of view, where the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units; obtaining a contour of a target based on the reference gray image; and complementing the to-be-processed point cloud based on the contour of the target to obtain a target point cloud. In this application, a high-quality lidar point cloud can be obtained without performing calibration and registration operations, hardware costs are reduced, and device utilization is improved.

## Description

This application claims priority to Chinese Patent Application No. 202211497989.2, filed with the China National Intellectual Property Administration on November 25, 2022, and entitled "LIDAR POINT CLOUD PROCESSING METHOD AND APPARATUS", which is incorporated herein by reference in its entirety.

### TECHNICAL FIELD

This application relates to point cloud processing technologies, and in particular, to a lidar point cloud processing method and apparatus.

### BACKGROUND

To meet 3D perception of an environment required in autonomous driving, a lidar has become one of the most important manners for detecting data. In an actual application, a point cloud generated by the lidar may describe a scene in a 3D form. However, due to limitations of an optical system and a scanning solution of the lidar, the point cloud may be missing. For example, in an autonomous driving application scenario, road conditions are complex. In extreme weather conditions such as rain, snow, and fog, a high reflective target like a vehicle light, a vehicle license plate, or a road plate may cause a problem of a missing point cloud or point cloud hole. As a result, it is difficult to accurately detect a key target according to a detection algorithm. For another example, in application scenarios such as a campus robot, a logistics vehicle, and a civil uncrewed aerial vehicle, a problem of a missing point cloud or point cloud hole also occurs. As a result, it is difficult to accurately detect a key target according to a detection algorithm. Therefore, point cloud complement becomes a key technology of a key target detection algorithm.

In a related technology, point cloud complement is implemented based on guidance of a 2D image generated by a camera. However, in this technology, a series of calibration and registration operations need to be performed, and then feature extraction and fusion are performed on the 2D image and a 3D point cloud, to finally implement point cloud complement. This directly increases algorithm difficulty and reduces target detection accuracy.

### SUMMARY

This application provides a lidar point cloud processing method and apparatus, to obtain a high-quality lidar point cloud without performing calibration and registration operations, so as to reduce hardware costs, and improve device utilization.

According to a first aspect, this application provides a lidar point cloud processing method, including: obtaining a to-be-processed point cloud and a reference gray image corresponding to a radar field of view, where the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units; obtaining a contour of a target based on the reference gray image; and complementing the to-be-processed point cloud based on the contour of the target to obtain a target point cloud.

In this embodiment, the 3D point cloud and the 2D gray image of a same field of view are obtained by using a single sensor in a lidar in a time-division manner, to ensure coordinate consistency between the 3D point cloud and the 2D gray image. In this way, even if no calibration and registration operations are performed, the gray image may be used as a reference to complement a hole or a missing point in the point cloud, to obtain a high-quality lidar point cloud. In the solution in which only one sensor is used, hardware costs are reduced and device utilization is improved.

The to-be-processed point cloud is synthesized by the point clouds of the plurality of units, and the reference gray image is synthesized by the gray images of the plurality of units.

The point cloud may include a plurality of units. The unit may be a single point in the point cloud, or the unit may be all points included in a line in the point cloud. For example, pixels corresponding to a complete point cloud of a frame are 576*96. If the unit is a single point, the point cloud includes 576*96 units. If the unit is a line, the point cloud may include 576 units or 96 units. It should be noted that another unit granularity may alternatively be used in embodiments of this application. This is not specifically limited.

As described above, for each unit, a sensor (for example, a photon detector) performs time-division collection, and may obtain a 3D point cloud and a 2D gray image of the unit.

An active imaging (Active Imaging) signal is a point cloud formed based on photons collected by the sensor (for example, the photon detector) under a laser, and the point cloud includes depth information under laser illumination. Therefore, the active imaging signal may refer to the 3D point cloud of the unit, and the 3D point cloud includes spatial location and intensity information of the unit. The intensity information may be independently indicated as a 2D gray image. Because the 2D gray image and the 3D point cloud are collected in a same light field, information about the 2D gray image is completely included in the 3D point cloud. However, the 2D gray image also has the same hole or missing point as the 3D point cloud.

An inactive imaging (Inactive Imaging) signal is an image formed based on photons collected by the sensor (for example, the photon detector) in ambient light, and the image includes intensity information under ambient light illumination. Therefore, the inactive imaging signal may refer to the 2D gray image of the unit. When the laser is turned off and there is only the ambient light, the image obtained through measurement by the lidar does not include the depth information but only includes the intensity information of the light because there is no laser.

It can be learned that the point cloud of the first unit (the first unit is any one of the plurality of units) and the gray image of the first unit are separately collected by a same sensor in collection cycles that alternate with each other. The point clouds of the plurality of units may be synthesized into the to-be-processed point cloud, and the gray images of the plurality of units may be synthesized into the reference gray image.

In this way, time-division collection of the single sensor (for example, the photon detector) can be implemented. Hardware costs are reduced, and device utilization can be improved. In addition, a same sensor alternately collects imaging signals (a point cloud and a gray image) of a same unit in short time, so that the point cloud and the gray image can correspond to a same field of view, to ensure coordinate consistency between the two. In this way, matching efficiency and accuracy between the two can be improved without a need to perform calibration and registration operations.

In this embodiment of this application, for the plurality of units, the point clouds and the gray images may be obtained unit by unit in a predetermined order (for example, in a left-to-right order or a top-to-bottom order, or in a Z-shaped order, which is not specifically limited); the point clouds of the plurality of units are synthesized to obtain the to-be-processed point cloud; and the gray images of the plurality of units are synthesized to obtain the reference gray image.

When the photon detector completes scanning of a complete field of view (namely, all units included in an entire frame), data of all the units in this scanning cycle (a FrameSync active cycle) is synthesized into complete frame data. In this process, motion compensation may be performed, to eliminate a location difference caused by a time difference between previous scanning and current scanning each time. The synthesized frame data includes the 3D point cloud (namely, the to-be-processed point cloud) synthesized by the point clouds of all the units and the 2D gray image (namely, the reference gray image) synthesized by the gray images of all the units.

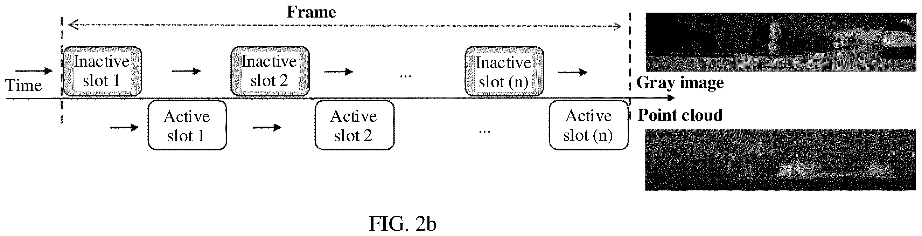

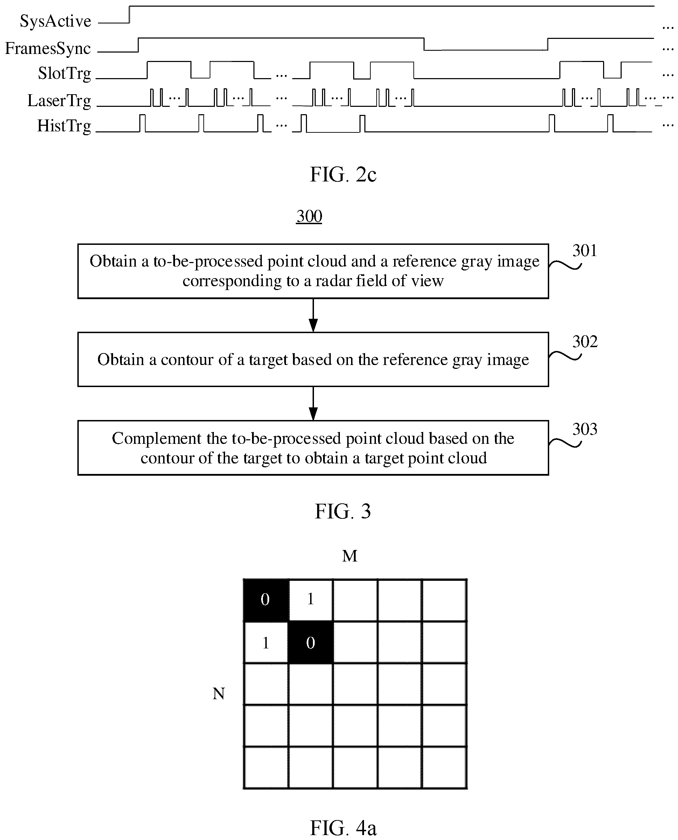

As shown in the time sequence in FIG. 2b and FIG. 2c, when processing is performed on the first unit, the gray image is obtained by using the sensor in a first collection cycle, and the point cloud is obtained by using the sensor in a second collection cycle. The first collection cycle and the second collection cycle alternate with each other, and a laser light is turned off in the first collection cycle, and the laser light is turned on in the second collection cycle. The first collection cycle may be a HistTrg active cycle, and the second collection cycle may be a SlotTrg active cycle. The two collection cycles alternate with each other, and a sequence of the two collection cycles is not limited. When the laser is turned on, the photon detector collects the depth information; and when the laser is turned off, the photon detector collects the intensity information of a scene in ambient light, to obtain a point cloud and a gray image of a unit in a time-division manner.

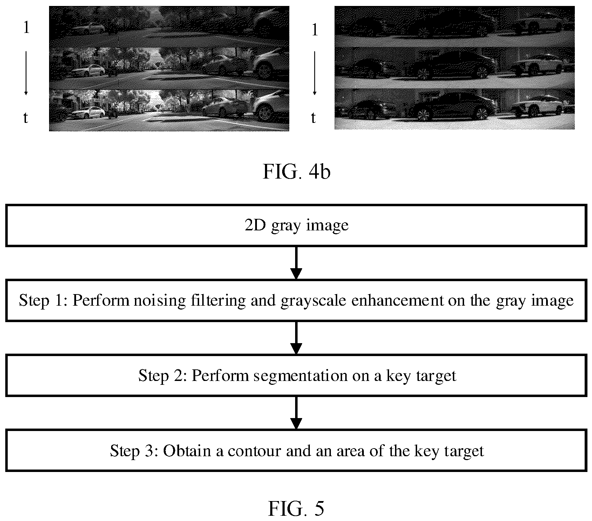

Optionally, the gray image is obtained based on received signals obtained by the sensor through a plurality of times of collection in the first collection cycle. In other words, a dynamic range and a signal-to-noise ratio of the 2D gray image can be improved by accumulating intensity information of the plurality of times of collection. For example, a single-photon detector is used as an example. FIG. 4a and FIG. 4b are diagrams of a photon counting principle of the single-photon detector. As shown in FIG. 4a, one unit may be indicated as an M*N array, and each small pixel (matrix element) in the array may be indicated as 0 or 1. Therefore, a dynamic range of the photon detector is 0-M*N. If t times of collection are accumulated, the dynamic range of the photon detector may be increased to 0-M*N*t, and precision and a signal-to-noise ratio of light intensity can be further improved. As shown in FIG. 4b, two groups of gray images show effect of respectively accumulating 1 to t times of collection by the photon detector. It can be learned that effect of the 2D gray image can be significantly improved provided that a value of t (for example, t≥5, and t=10 is preferred) is properly set.

The target may be detected from the reference gray image based on a preset target of interest, and then target segmentation is performed on the reference gray image to obtain the contour of the target.

Optionally, enhancement processing may be first performed on the reference gray image, where the enhancement processing includes noising filtering and/or grayscale enhancement.

In this embodiment of this application, a contour feature and pixel coordinates of the target may be extracted from the reference gray image. Enhancement processing is first performed on the gray image, and the processing includes conventional noising filtering and grayscale enhancement. This can help extract the target of interest (for example, a vehicle, a pedestrian, or a road plate). Then segmentation for the target of interest is performed on the enhanced gray image, to obtain the contour and an area of the target.

In this embodiment of this application, a point cloud depth image may be obtained based on the to-be-processed point cloud; then, a target area corresponding to same coordinates is found from the point cloud depth image based on the coordinates of the contour of the target on the reference gray image; a to-be-complemented target area is obtained from the to-be-processed point cloud based on the target area; and a point complementing operation is performed on the to-be-complemented target area to obtain the target point cloud.

A target outer contour is segmented from the point cloud depth image based on guidance of the reference gray image. Because the point cloud and the gray image are for a same unit and are collected by a same sensor, coordinate systems of the point cloud and the gray image are completely the same, that is, coordinates of a pixel in the reference gray image and coordinates of corresponding pixel in the point cloud depth image are the same. Based on this, based on the coordinates of the contour of the target on the reference gray image, a pixel extracted from a location that is on the point cloud depth image and that is indicated by the coordinates same as the coordinates of the contour of the target is also the contour of the target, and the outer contour of the target is segmented from the point cloud depth image.

As described above, according to the time sequence and a control solution provided in this embodiment of this application, time-division collection of the single sensor (for example, the photon detector) can be implemented. A same sensor alternately collects imaging signals (a point cloud and a gray image) in short time, so that the point cloud and the gray image can correspond to a same field of view, so as to ensure coordinate consistency between the point cloud and the gray image. Based on this feature, there is no need to perform calibration and registration operations. In other words, a gray image (2D gray image) may be used as a reference to complement a hole or a missing point in a point cloud (3D point cloud), to obtain a high-quality lidar point cloud.

Then, an interpolation area and an extrapolation area (the interpolation area is an internal missing point, and does not border the outer contour, and the extrapolation area is the opposite of the interpolation area) that are to be complemented are calculated based on a contour segmented in the 2D gray image and a depth hole image. A centrosymmetric circular interpolation kernel (the interpolation kernel may be obtained by using any technology, and this is not specifically limited in embodiments of this application) is generated based on a hole area, and a convolution and division operation is performed on the depth image and the depth hole image, to implement hole interpolation (in this step, point complementing of a hole point is implemented, but it cannot ensure that a shape obtained through complementing meets a real outer contour feature). Bilateral guidance is performed, based on the contour segmented in the 2D gray image, on the area in which the hole interpolation is implemented, and an extra point is removed, to implement accurate point cloud missing complementing.

According to a second aspect, this application provides a processing apparatus, including: an obtaining module, configured to: obtain a to-be-processed point cloud and a reference gray image corresponding to a radar field of view, where the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units; and obtain a contour of a target based on the reference gray image; and a point complementing module, configured to complement the to-be-processed point cloud based on the contour of the target to obtain a target point cloud.

In a possible implementation, the obtaining module is specifically configured to: obtain, for the plurality of units, the point clouds and the gray images unit by unit in a predetermined order; synthesize the point clouds of the plurality of units to obtain the to-be-processed point cloud; and synthesize the gray images of the plurality of units to obtain the reference gray image.

In a possible implementation, the obtaining module is specifically configured to: when the first unit is processed, obtain the gray image by using the sensor in a first collection cycle; and obtain the point cloud by using the sensor in a second collection cycle, where the first collection cycle and the second collection cycle alternate with each other, a laser light is turned off in the first collection cycle, and the laser light is turned on in the second collection cycle.

In a possible implementation, the gray image is obtained based on received signals obtained by the sensor through a plurality of times of collection in the first collection cycle.

In a possible implementation, the first unit includes one or more points obtained through a single time of collection.

In a possible implementation, the obtaining module is specifically configured to: detect the target from the reference gray image based on a preset target of interest; and perform target segmentation on the reference gray image to obtain the contour of the target.

In a possible implementation, the obtaining module is further configured to perform enhancement processing on the reference gray image, where the enhancement processing includes noising filtering and/or grayscale enhancement.

In a possible implementation, the point complementing module is specifically configured to: obtain a point cloud depth image based on the to-be-processed point cloud; find, from the point cloud depth image based on coordinates of the contour of the target on the reference gray image, a target area corresponding to same coordinates; obtain a to-be-complemented target area on the to-be-processed point cloud based on the target area; and perform a point complementing operation on the to-be-complemented target area to obtain the target point cloud.

In a possible implementation, the point complementing module is specifically configured to: obtain a hole image from the to-be-processed point cloud, where the hole image is used to describe a missing status of the to-be-processed point cloud; and perform convolution on the hole image and the target area to obtain the to-be-complemented target area.

According to a third aspect, this application provides a point cloud processing apparatus, including a laser control unit, a photon detector, and a signal processing unit, where the laser control unit is configured to control a laser to be turned on or turned off; the photon detector is configured to: separately collect an optical signal when the laser is turned on or turned off, and convert the optical signal into an electrical signal; and the signal processing unit is configured to: obtain a to-be-processed point cloud and a reference gray image corresponding to a radar field of view, where the to-be-processed point cloud is synthesized by point clouds of a plurality of units, the reference gray image is synthesized by gray images of the plurality of units, a point cloud of a first unit is obtained based on the electrical signal obtained when the laser is turned on, a gray image of the first unit is obtained based on the electrical signal obtained when the laser is turned off, the point cloud of the first unit and the gray image of the first unit are alternately collected by a same sensor, and the first unit is any one of the plurality of units; obtain a contour of a target based on the reference gray image; and complement the to-be-processed point cloud based on the contour of the target to obtain a target point cloud.

In a possible implementation, the signal processing unit is further configured to implement the method according to any other implementation of the first aspect.

According to a fourth aspect, this application provides a device, including: one or more processors; and a memory, configured to store one or more programs. When the one or more programs are executed by the one or more processors, the one or more processors are enabled to implement the method according to any implementation of the first aspect.

According to a fifth aspect, this application provides a computer-readable storage medium, including a computer program. When the computer program is executed on a computer, the computer is enabled to perform the method according to any implementation of the first aspect.

According to a sixth aspect, this application provides a computer program product. The computer program product includes computer program code. When the computer program code is run on a computer, the computer is enabled to perform the method according to any implementation of the first aspect.

According to a seventh aspect, this application provides a chip, including a processor and a memory. The memory is configured to store a computer program, and the processor is configured to: invoke and run the computer program stored in the memory, to perform the method according to any implementation of the first aspect.

### BRIEF DESCRIPTION OF DRAWINGS

FIG. 1 is a diagram of an application architecture according to an embodiment of this application;
FIG. 2a is a diagram of a point cloud processing apparatus according to an embodiment of this application;
FIG. 2b is a diagram of a time sequence chart;
FIG. 2c is a diagram of a control time sequence of time-division collection of a photon detector;
FIG. 3 is a flowchart of a process 300 of a lidar point cloud processing method according to an embodiment of this application;
FIG. 4a and FIG. 4b are diagrams of a photon counting principle of a single-photon detector;
FIG. 5 is a schematic flowchart of processing a reference gray image;
FIG. 6 is a schematic flowchart of processing a point cloud;
FIG. 7 is a diagram of a 3D point cloud and a 2D gray image of a same field of view;
FIG. 8 is a schematic flowchart of processing a 2D gray image;
FIG. 9 is a schematic flowchart of detecting a to-be-complemented area of a point cloud;
FIG. 10a and FIG. 10b each are a diagram of complementing effect of a missing point cloud in a target area;
FIG. 11a and FIG. 11b each are a diagram of complementing effect of a point cloud; and
FIG. 12 is a diagram of an example of a structure of a processing apparatus 1200 according to an embodiment of this application.

### DESCRIPTION OF EMBODIMENTS

To make objectives, technical solutions, and advantages of this application clearer, the following clearly and completely describes the technical solutions in this application with reference to the accompanying drawings in this application. It is clear that described embodiments are some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying an order. In addition, the terms "include", "have", and any variant thereof are intended to cover non-exclusive inclusion, for example, include a series of steps or units. For example, methods, systems, products, or devices are not necessarily limited to those steps or units expressly listed, but may include other steps or units not expressly listed or inherent to such processes, methods, products, or devices.

It should be understood that in this application, "at least one (item)" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Terms and technologies in embodiments of this application are described as follows.

Time division multiplexing (Time Division Multiplexing, TDM): A same physical component is used to transmit or obtain different signals in different time periods, to implement multi-channel transmission or use.

Photon counting (Photon Counting): Photon counting is a technology for detecting weak optical signals. A typical method in photon counting is to detect optical signals in a form of photoelectrons by using a photomultiplier tube as a receiver. A lidar detection system is based on photon counting.

Point cloud (Point Cloud): A point cloud is a set of massive points that indicate a feature of a target surface. A point cloud obtained through measurement by a lidar includes three-dimensional coordinates (XYZ) and a laser reflection intensity (Intensity).

Point cloud complement (Point Cloud Complement): When indicating a feature of a target surface, a point cloud obtained through measurement by the lidar encounters a phenomenon like a random hole or a missing point cloud due to particles in the air, a reflective attribute of an object surface, a signal loss, or the like. The point cloud complement is to implement a point complementing operation for a hole or a missing point based on a feature of a surrounding point.

Active imaging (Active Imaging): A point cloud is formed based on photons collected by a sensor under a laser, and the point cloud includes depth information under laser illumination. A 3D point cloud obtained through measurement by a lidar is active imaging, and includes spatial location and intensity information of each point. The intensity information may be independently indicated as a 2D gray image. Because the 2D gray image and the 3D point cloud are collected in a same light field, information about the 2D gray image is completely included in the 3D point cloud.

Inactive imaging (Inactive Imaging): An image is formed based on photons collected by a sensor in ambient light, and the image indicates intensity information under ambient light illumination. When a laser is turned off and there is only the ambient light, an image obtained through measurement by a lidar does not include depth information but only includes intensity information of the light because there is no time of flight (time of flight, ToF) information of the laser. Therefore, the image is a 2D gray image.

A point cloud hole or a missing point cloud may cause a loss of accuracy of a point cloud-based algorithm. For example, a key target cannot be accurately detected from a point cloud. For another example, a scenario cannot be accurately replicated based on a point cloud. Therefore, the point cloud complement is a key technology of the point cloud-based algorithm. Based on this, embodiments of this application provide a lidar point cloud processing method, to implement point cloud complement.

For example, the method provided in embodiments of this application may be applied to the following two application scenarios:

### Application Scenario 1: Autonomous driving application scenario

In the autonomous driving application scenario, road conditions are complex. In extreme weather conditions such as rain, snow, and fog, a high reflective target like a vehicle light, a vehicle license plate, or a road plate may cause a problem of a missing point cloud or point cloud hole. As a result, it is difficult to accurately detect a key target according to a detection algorithm.

### Application Scenario 2: Monitoring or shooting application scenario

In application scenarios such as a campus robot, a logistics vehicle, and a civil uncrewed aerial vehicle, a problem of a missing point cloud or point cloud hole also occurs due to particles in the air, a reflective attribute of an object surface, a signal loss, or the like. As a result, it is difficult to accurately detect a key target according to a detection algorithm.

In the foregoing application scenarios, the point cloud complement can be implemented in the method in embodiments of this application, to improve point cloud quality, so as to ensure that the key target can be accurately detected according to the detection algorithm.

It should be noted that, as an example, the foregoing describes two application scenarios to which the method provided in embodiments of this application may be applied. However, this does not constitute a limitation on the application scenarios. The method provided in embodiments of this application may be further applied to another application scenario of medium or short range lidar measurement imaging. This is not specifically limited.

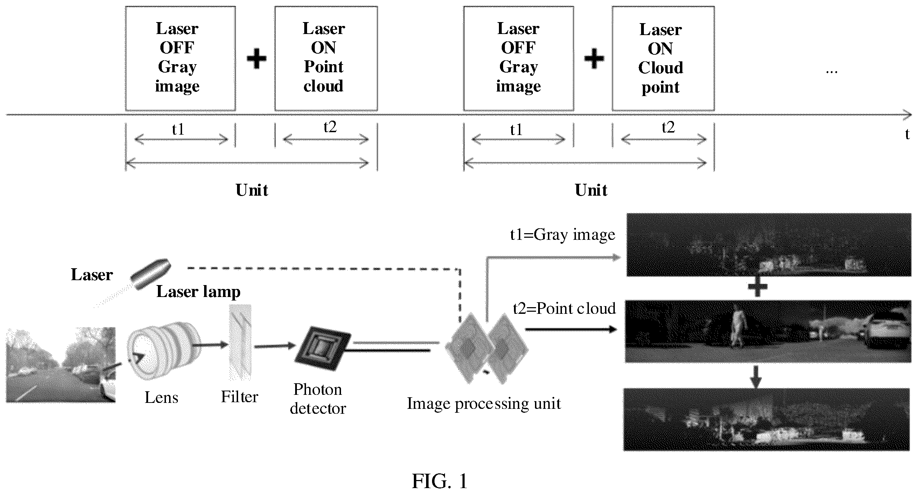

FIG. 1 is a diagram of an application architecture according to an embodiment of this application. A 3D point cloud obtained through measurement by a lidar includes spatial location and intensity information of each point. The intensity information may be independently indicated as a 2D gray image. Because the 2D gray image and the 3D point cloud are collected in a same light field, information about the 2D gray image is completely included in the 3D point cloud. When a problem of a point cloud hole or a missing point cloud occurs in the 3D point cloud, the intensity information (the 2D gray image) included in the 3D point cloud also suffers the same problem.

Based on this, according to the lidar point cloud processing method provided in embodiments of this application, a solution is provided, that is, the lidar is disposed to obtain intensity information (a 2D gray image) of a same scenario under ambient light (without a laser). This is another 2D gray image (different from the intensity information (the 2D gray image) in the 3D point cloud mentioned above) that has a same field of view as the 3D point cloud. In this way, due to different light field distribution, the another 2D gray image may be used as a reference for complementing lost information on the 3D point cloud.

As shown in FIG. 1, the lidar sequentially collects data by using a point (point) or a line as a unit. A time sequence of a laser light is preset. When any unit is collected, a collection cycle t1 and a collection cycle t2 are included. In t1, the laser light is turned off (Laser OFF), and a gray image (Gray image) is obtained. In t2, the laser light is turned on (Laser ON), and a point cloud (Point cloud) is obtained.

In t1, an image processing unit controls the laser light to be turned off, and there is only ambient light around. A lens (Lens) collects light in a field of view, and after the light passes through a filter (Filter), light is received by a photon detector. The photon detector converts an optical signal into an electrical signal and transmits the electrical signal to the image processing unit. The image processing unit obtains the gray image based on the electrical signal.

In t2, the image processing unit controls the laser light to be turned on and emit a laser (Laser) in a field of view direction. The lens (Lens) collects light in the field of view, and after the light passes through the filter (Filter), light is received by the photon detector. The photon detector converts an optical signal into an electrical signal and transmits the electrical signal to the image processing unit. The image processing unit obtains the point cloud based on the electrical signal.

After collection on all units of an entire frame are completed according to the foregoing method, a 3D point cloud and a 2D gray image corresponding to the entire frame are obtained through synthesis, a contour and a feature of a target are extracted from the 2D gray image, and a 3D point cloud of a same unit is complemented, so as to obtain a final 3D point cloud.

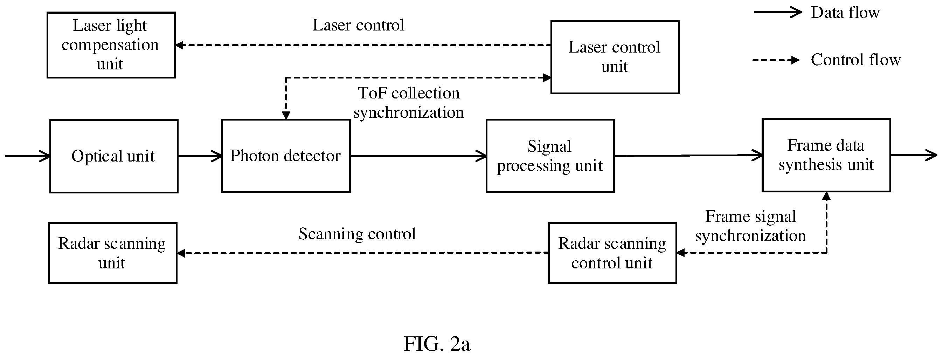

FIG. 2a is a diagram of a point cloud processing apparatus according to an embodiment of this application. As shown in FIG. 2a, the apparatus mainly includes a laser control unit, a photon detector, and a signal processing unit. In addition, the apparatus may further include: a radar scanning unit, a radar scanning control unit, a laser light compensation unit, an optical unit, and a frame data synthesis unit.

The laser light compensation unit may correspond to the laser light in FIG. 1, the optical unit may correspond to the lens in FIG. 1, the photon detector may correspond to the photon detector in FIG. 1, and the signal processing unit and the frame data synthesis unit may be integrated into the image processing unit in FIG. 1. Optionally, the radar scanning control unit and the laser control unit may also be integrated into the image processing unit in FIG. 1.

The radar scanning control unit and the frame data synthesis unit are synchronized based on a frame signal, to control a rotation direction of the radar scanning unit, so as to change a field of view.

The laser control unit and the photon detector implement ToF collection synchronization. On one hand, the photon detector may always measure intensity information. A difference lies in that: intensity information measured during Laser ON includes laser information and ambient light information, and intensity information measured during Laser OFF includes only ambient light information. On the other hand, when there is a laser, the photon detector may further measure depth information based on the laser. In this way, it can be ensured that at a start moment of Laser ON, the laser control unit controls the laser light compensation unit to be turned on, the photon detector starts to measure a laser distance to obtain the depth information, and simultaneously, the photon detector measures measurement the intensity information, to generate a 3D point cloud. During Laser OFF, the laser control unit controls the laser light compensation unit to be turned off, and the photon detector measures only the intensity information, to generate a 2D gray image.

The signal processing unit and the frame data synthesis unit separately process signals collected during Laser ON and Laser OFF, to obtain data of an entire frame.

Complete data of a frame includes the 3D point cloud and the corresponding 2D gray image. A lidar sequentially collects data by using a point or a line as a unit, the depth information and the intensity information are collected at each point or line in a time-division manner, and then these pieces of information are synthesized into the complete frame data. ON/OFF of the laser light compensation unit is strictly synchronized with a collection mode of the photon detector. During ON, the depth information is collected to obtain the 3D point cloud. During OFF, the intensity information is collected to obtain the 2D gray image.

The photon detector used in the apparatus can implement a photon counting accumulation or histogram generation (Histogram Generation) function, and can respond to intensity characterization of a light field in a specific cycle.

FIG. 2b is a diagram of a time sequence chart. As shown in FIG. 2b, in a collection cycle of data of a frame (Frame), an inactive slot (Inactive Slot 1, Inactive Slot 2, ..., or Inactive Slot n) and an active slot (Active Slot 1, Active Slot 2, ..., or Active Slot n) that alternate with each other are included. In the inactive slot, the 2D gray image (Gray image) is output, and in the active slot the 3D point cloud (Point cloud) is output.

FIG. 2c is a diagram of a control time sequence of time-division collection of a photon detector. To implement TDM, the photon detector may keep ToF collection synchronization with the laser control unit, to achieve precise cooperation with the laser light compensation unit.

As shown in FIG. 2c, six time sequence control signals are set in this embodiment of this application, and the six time sequence control signals cooperate with each other, to implement the time sequence shown in FIG. 2c. The following describes the six time sequence control signals. A high electrical level indicates that a signal is active, and a low electrical level indicates that a signal is inactive.

SysActive: A system activation signal, where when the signal is at a high electrical level, another time sequence control signal is enabled.

FrameSync: An active frame signal, where when the signal is at a high electrical level, frame data is obtained; and when the signal is at a low electrical level, obtaining the frame data is stopped.

SlotTrg: A depth information collection mode of a unit, where when this signal is at a high electrical level, the photon detector enters the depth information collection mode, and in this case, the 3D point cloud is obtained.

LaserTrg: A laser pulse control signal, where when the signal is at a high electrical level, a laser beam is emitted.

HistTrg: Intensity information collection mode of a unit, where when this signal is at a high electrical level, the photon detector enters the intensity information collection mode, and in this case, the 2D gray image is obtained.

It can be learned that a complete frame (Frame) includes a plurality of groups of SlotTrg active cycles and HistTrg active cycles that alternate with each other. SlotTrg and HistTrg are enabled alternately, so that the depth information collection mode and the intensity information collection mode are implemented in a time-division manner. LaserTrg controls ON/OFF of the laser and controls ON/OFF of the laser to be strictly synchronized with the SlotTrg active cycles. A single SlotTrg active cycle includes a plurality of LaserTrg signals. In this way, a detection rate of the depth information of the target can be improved by using a multi-laser pulse.

FIG. 3 is a flowchart of a process 300 of a lidar point cloud processing method according to an embodiment of this application. The process 300 may be performed by the image processing unit in the foregoing embodiment. The process 300 is described as a series of steps or operations. It should be understood that the process 300 may be performed in various orders and/or simultaneously, and is not limited to an execution order shown in FIG. 3. The process 300 includes the following steps.

Step 301: Obtain a to-be-processed point cloud and a reference gray image corresponding to a radar field of view.

The to-be-processed point cloud is synthesized by point clouds of a plurality of units, and the reference gray image is synthesized by gray images of the plurality of units.

The point cloud may include a plurality of units. The unit may be a single point in the point cloud, or the unit may be all points included in a line in the point cloud. For example, pixels corresponding to a complete point cloud of a frame are 576*96. If the unit is a single point, the point cloud includes 576*96 units. If the unit is a line, the point cloud may include 576 units or 96 units. It should be noted that another unit granularity may alternatively be used in embodiments of this application. This is not specifically limited.

As described above, for each unit, a sensor (for example, a photon detector) performs time-division collection, and may obtain a 3D point cloud and a 2D gray image of the unit.

An active imaging (Active Imaging) signal is a point cloud formed based on photons collected by the sensor (for example, the photon detector) under a laser, and the point cloud includes depth information under laser illumination. Therefore, the active imaging signal may refer to the 3D point cloud of the unit, and the 3D point cloud includes spatial location and intensity information of the unit. The intensity information may be independently indicated as a 2D gray image. Because the 2D gray image and the 3D point cloud are collected in a same light field, information about the 2D gray image is completely included in the 3D point cloud. However, the 2D gray image also has the same hole or missing point as the 3D point cloud.

An inactive imaging (Inactive Imaging) signal is an image formed based on photons collected by the sensor (for example, the photon detector) in ambient light, and the image includes intensity information under ambient light illumination. Therefore, the inactive imaging signal may refer to the 2D gray image of the unit. When the laser is turned off and there is only the ambient light, the image obtained through measurement by a lidar does not include the depth information but only includes the intensity information of the light because there is no laser.

It can be learned that a point cloud of a first unit (the first unit is any one of the plurality of units) and a gray image of the first unit are separately collected by a same sensor in collection cycles that alternate with each other. The point clouds of the plurality of units may be synthesized into the to-be-processed point cloud, and the gray images of the plurality of units may be synthesized into the reference gray image.

In this way, time-division collection of the single sensor (for example, the photon detector) can be implemented. Hardware costs are reduced, and device utilization can be improved. In addition, a same sensor alternately collects imaging signals (a point cloud and a gray image) of a same unit in short time, so that the point cloud and the gray image can correspond to a same field of view, to ensure coordinate consistency between the two. In this way, matching efficiency and accuracy between the two can be improved without a need to perform calibration and registration operations.

In this embodiment of this application, for the plurality of units, the point clouds and the gray images may be obtained unit by unit in a predetermined order (for example, in a left-to-right order or a top-to-bottom order, or in a Z-shaped order, which is not specifically limited); the point clouds of the plurality of units are synthesized to obtain the to-be-processed point cloud; and the gray images of the plurality of units are synthesized to obtain the reference gray image.

In the foregoing synthesis method, the point clouds of the units may be spliced based on locations of the units, to obtain the point cloud of an entire frame, and the gray images of the units are spliced, to obtain the gray image of the entire frame.

When the photon detector completes scanning of a complete field of view (namely, all units included in an entire frame), data of all the units in this scanning cycle (a FrameSync active cycle) is synthesized into complete frame data. In this process, motion compensation may be performed, to eliminate a location difference caused by a time difference between previous scanning and current scanning each time. The synthesized frame data includes the 3D point cloud (namely, the to-be-processed point cloud) synthesized by the point clouds of all the units and the 2D gray image (namely, the reference gray image) synthesized by the gray images of all the units.

As shown in the time sequence in FIG. 2b and FIG. 2c, when processing is performed on the first unit, the gray image is obtained by using the sensor in a first collection cycle, and the point cloud is obtained by using the sensor in a second collection cycle. The first collection cycle and the second collection cycle alternate with each other, and a laser light is turned off in the first collection cycle, and the laser light is turned on in the second collection cycle. The first collection cycle may be a HistTrg active cycle, and the second collection cycle may be a SlotTrg active cycle. The two collection cycles alternate with each other, and a sequence of the two collection cycles is not limited. When the laser is turned on, the photon detector collects the depth information; and when the laser is turned off, the photon detector collects the intensity information of a scene in ambient light, to obtain a point cloud and a gray image of a unit in a time-division manner.

Optionally, the gray image is obtained based on received signals obtained by the sensor through a plurality of times of collection in the first collection cycle. In other words, a dynamic range and a signal-to-noise ratio of the 2D gray image can be improved by accumulating intensity information of the plurality of times of collection. For example, a single-photon detector is used as an example. FIG. 4a and FIG. 4b are diagrams of a photon counting principle of the single-photon detector. As shown in FIG. 4a, one unit may be indicated as an M*N array, and each small pixel (matrix element) in the array may be indicated as 0 or 1. Therefore, a dynamic range of the photon detector is 0-M*N. If t times of collection are accumulated, the dynamic range of the photon detector may be increased to 0-M*N*t, and precision and a signal-to-noise ratio of light intensity can be further improved. As shown in FIG. 4b, two groups of gray images show effect of respectively accumulating 1 to t times of collection by the photon detector. It can be learned that effect of the 2D gray image can be significantly improved provided that a value of t (for example, t≥5, and t=10 is preferred) is properly set.

Step 302: Obtain a contour of a target based on the reference gray image.

The target may be detected from the reference gray image based on a preset target of interest, and then target segmentation is performed on the reference gray image to obtain the contour of the target.

Optionally, enhancement processing may be first performed on the reference gray image, where the enhancement processing includes noising filtering and/or grayscale enhancement.

In this embodiment of this application, a contour feature and pixel coordinates of the target may be extracted from the reference gray image. FIG. 5 is a schematic flowchart of processing the reference gray image. As shown in FIG. 5, enhancement processing is first performed on the gray image, and the processing includes conventional noising filtering and grayscale enhancement. This can help extract the target of interest (for example, a vehicle, a pedestrian, or a road plate). Then segmentation for the target of interest is performed on the enhanced gray image, to obtain the contour and an area of the target.

Step 303: Complement the to-be-processed point cloud based on the contour of the target to obtain a target point cloud.

In this embodiment of this application, a point cloud depth image may be obtained based on the to-be-processed point cloud; then, a target area corresponding to same coordinates is found from the point cloud depth image based on the coordinates of the contour of the target on the reference gray image; a to-be-complemented target area is obtained from the to-be-processed point cloud based on the target area; and a point complementing operation is performed on the to-be-complemented target area to obtain the target point cloud.

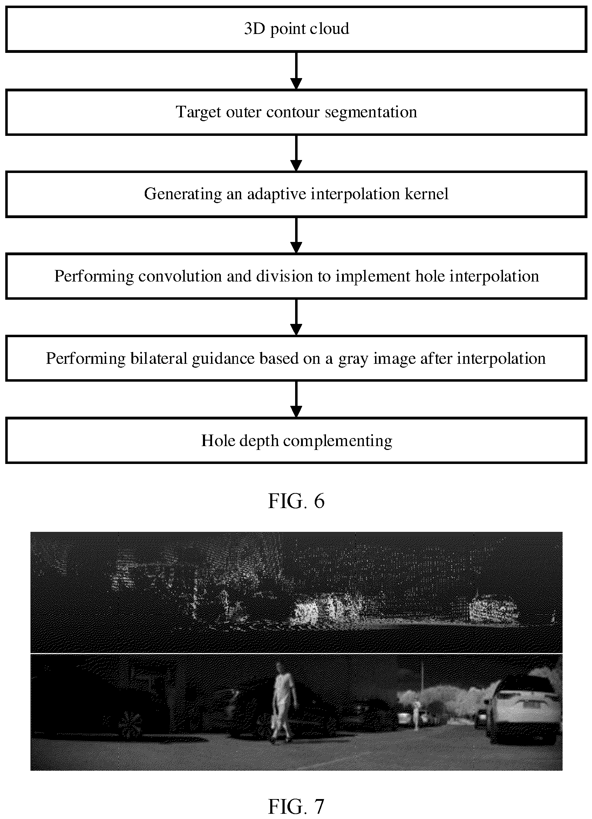

FIG. 6 is a schematic flowchart of processing a point cloud. As shown in FIG. 6, a target outer contour is segmented from the point cloud depth image based on guidance of the reference gray image. Because the point cloud and the gray image are for a same unit and are collected by a same sensor, coordinate systems of the point cloud and the gray image are completely the same, that is, coordinates of a pixel in the reference gray image and coordinates of corresponding pixel in the point cloud depth image are the same. Based on this, based on the coordinates of the contour of the target in the reference gray image, a pixel extracted from a location that is on the point cloud depth image and that is indicated by the coordinates same as the coordinates of the contour of the target is also the contour of the target, and the outer contour of the target is segmented from the point cloud depth image.

As described above, according to the time sequence and a control solution provided in this embodiment of this application, time-division collection of the single sensor (for example, the photon detector) can be implemented. A same sensor alternately collects imaging signals (a point cloud and a gray image) in short time, so that the point cloud and the gray image can correspond to a same field of view, so as to ensure coordinate consistency between the point cloud and the gray image. Based on this feature, there is no need to perform calibration and registration operations. In other words, a gray image (2D gray image) may be used as a reference to complement a hole or a missing point in a point cloud (3D point cloud), to obtain a high-quality lidar point cloud.

Then, an interpolation area and an extrapolation area (the interpolation area is an internal missing point, and does not border the outer contour, and the extrapolation area is the opposite of the interpolation area) that are to be complemented are calculated based on a contour segmented in the 2D gray image and a depth hole image. A centrosymmetric circular interpolation kernel (the interpolation kernel may be obtained by using any technology, and this is not specifically limited in embodiments of this application) is generated based on a hole area, and a convolution and division operation is performed on the depth image and the depth hole image, to implement hole interpolation (in this step, point complementing of a hole point is implemented, but it cannot ensure that a shape obtained through complementing meets a real outer contour feature). Bilateral guidance is performed, based on the contour segmented in the 2D gray image, on the area in which the hole interpolation is implemented, and an extra point is removed, to implement accurate point cloud missing complementing.

In this embodiment, the 3D point cloud and the 2D gray image of a same field of view are obtained by using the single sensor in the lidar in a time-division manner, to ensure coordinate consistency between the 3D point cloud and the 2D gray image. In this way, even if no calibration and registration operations are performed, the gray image may be used as a reference to complement a hole or a missing point in the point cloud, to obtain a high-quality lidar point cloud. In the solution in which only one sensor is used, hardware costs are reduced and device utilization is improved.

The technical solution of a method embodiment shown in FIG. 3 is described in detail below by using a specific embodiment.

An autonomous driving vehicle-mounted lidar is used as an example. Refer to the time sequence shown in FIG. 2c. Specific implementation steps are as follows:
(1) The photon detector of the lidar performs time-division collection, to obtain the 3D point cloud and the 2D gray image of the same field of view.

In the intensity information collection mode (in the HistTrg active cycle), during Laser OFF, time for a single time of sampling performed by the photon detector is X1 ns. A gray image of a specific unit may be obtained by accumulating N times of sampling, that is, time for the N times of sampling is NX1 ns in total, to improve a signal-to-noise ratio and a dynamic range of the 2D gray image.

In the depth information collection mode (in the SlotTrg active cycle), during Laser ON, based on a longest detection distance designed by the lidar, time for a single time of sampling performed by the photon detector is X2 ns, and a point cloud of a specific unit may be obtained by accumulating M times of sampling, that is, time for the M times of sampling is MX2 ns in total. Echo signals of the laser are collected in the M times of sampling, to obtain depth information.

The gray images of the plurality of units are synthesized into the 2D gray image of the entire frame, the point clouds of the plurality of units are synthesized into the 3D point cloud of the entire frame, and the two form the frame data together. For example, FIG. 7 is a diagram of a 3D point cloud and a 2D gray image of a same field of view.

(2) Perform pre-processing and segmentation on the 2D gray image.

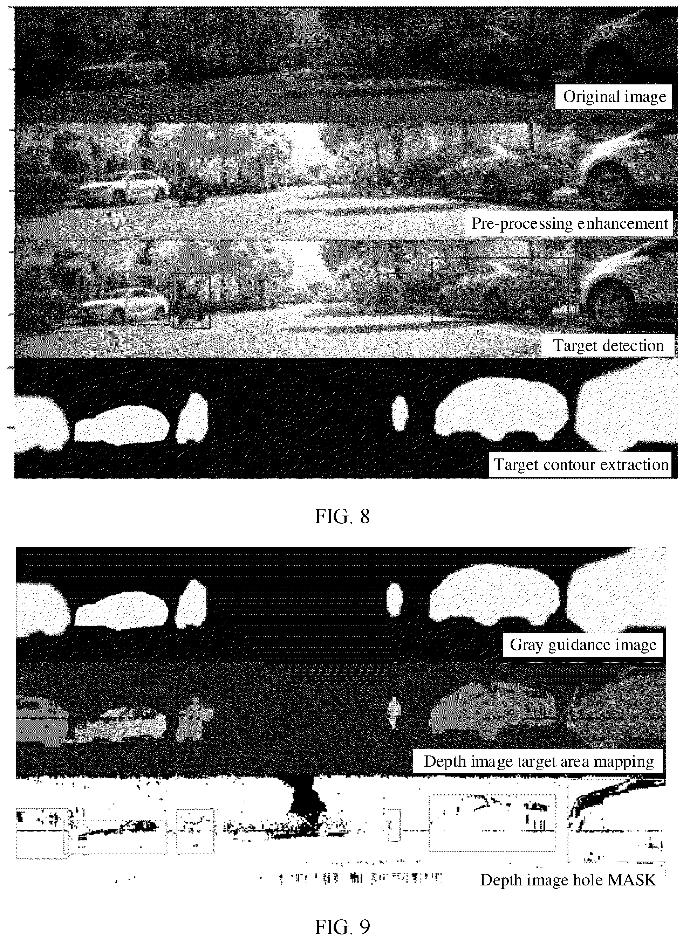

A point cloud complement procedure performed based on guidance of the 2D gray image is shown in FIG. 8 (FIG. 8 is a schematic flowchart of processing a 2D gray image). After enhancement processing (for example, noising filtering and/or grayscale enhancement) is performed on the 2D gray image (original image), target segmentation and contour extraction are facilitated. The target is detected from the enhanced gray image based on the preset target of interest. For example, a target of interest in a driving area is used as a to-be-complemented object (namely, the target). The target segmented from the enhanced gray image is matched with the target on the point cloud depth image through coordinate mapping, to obtain the target area that needs to be complemented on the point cloud depth image.

(3) Detect and complement a missing point cloud based on guidance of the 2D gray image.

As shown in FIG. 9 (FIG. 9 is a schematic flowchart of detecting a to-be-complemented area of a point cloud), the contour of the target is mapped to the point cloud depth image (the point cloud depth image may be obtained by performing projection on the 3D point cloud) based on guidance of the contour of the target obtained through segmentation on the enhanced gray image, to obtain the target area on the point cloud depth image. In addition, a hole MASK (no point or a point at infinity is filtered out) is obtained on the point cloud, and convolution is performed on the hole MASK and the target area on the point cloud depth image, to obtain an actual to-be-complemented target area.

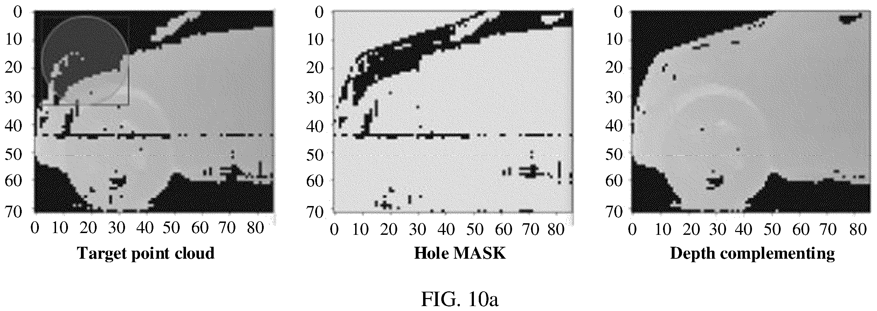

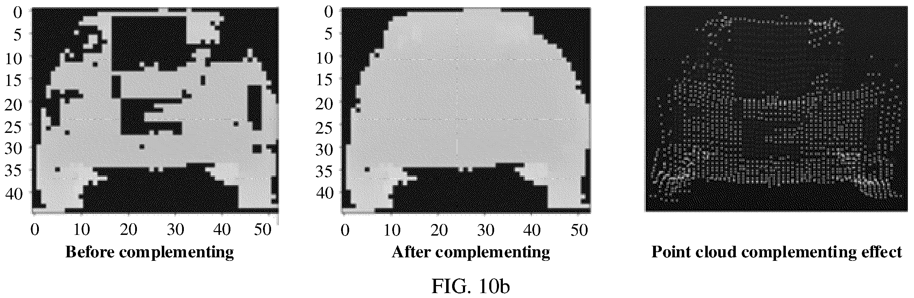

Based on this, the point complementing operation is performed on a missing point cloud in the actual to-be-complemented target area. As shown in FIG. 10a and FIG. 10b (FIG. 10a and FIG. 10b each are a diagram of complementing effect of a missing point cloud in a target area), hole complementing effect is reflected by using areas of two key targets.

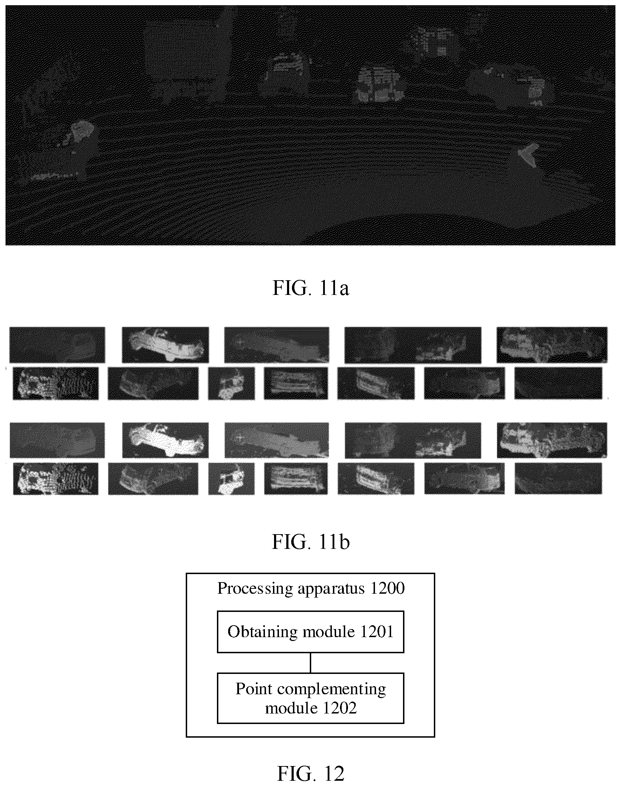

FIG. 11a and FIG. 11b each are a diagram of complementing effect of a point cloud. FIG. 11a shows a global display of the complementing effect. FIG. 11b shows a local target display of the complementing effect.

In embodiments of this application, a point cloud complement solution from data collection to algorithm processing is implemented. In comparison with a related technology, in embodiments of this application, only a single lidar is needed to implement embodiments, without needing an additional sensor. This has a great cost advantage, and avoids difficulties in multi-sensor deployment, calibration, and registration. Information obtained through point cloud complement is reliable, algorithm complexity of the point cloud complement is low, and a good commercial implementation condition is met. This provides an innovative solution for improving perception performance of the lidar.

FIG. 12 is a diagram of an example of a structure of a processing apparatus 1200 according to an embodiment of this application. As shown in FIG. 12, the apparatus 1200 in this embodiment may be used in an image processing unit. The apparatus 1200 may include: an obtaining module 1201 and a point complementing module 1202.

The obtaining module 1201 is configured to: obtain a to-be-processed point cloud and a reference gray image corresponding to a radar field of view, where the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units; and obtain a contour of a target based on the reference gray image; and the point complementing module 1202 is configured to complement the to-be-processed point cloud based on the contour of the target to obtain a target point cloud.

In a possible implementation, the obtaining module 1201 is specifically configured to: obtain, for the plurality of units, the point clouds and the gray images unit by unit in a predetermined order; synthesize the point clouds of the plurality of units to obtain the to-be-processed point cloud; and synthesize the gray images of the plurality of units to obtain the reference gray image.

In a possible implementation, the obtaining module 1201 is specifically configured to: when the first unit is processed, obtain the gray image by using the sensor in a first collection cycle; and obtain the point cloud by using the sensor in a second collection cycle, where the first collection cycle and the second collection cycle alternate with each other, a laser light is turned off in the first collection cycle, and the laser light is turned on in the second collection cycle.

In a possible implementation, the gray image is obtained based on received signals obtained by the sensor through a plurality of times of collection in the first collection cycle.

In a possible implementation, the first unit includes one or more points obtained through a single time of collection.

In a possible implementation, the obtaining module 1201 is specifically configured to: detect the target from the reference gray image based on a preset target of interest; and perform target segmentation on the reference gray image to obtain the contour of the target.

In a possible implementation, the obtaining module 1201 is further configured to perform enhancement processing on the reference gray image, where the enhancement processing includes noising filtering and/or grayscale enhancement.

In a possible implementation, the point complementing module 1202 is specifically configured to: obtain a point cloud depth image based on the to-be-processed point cloud; find, from the point cloud depth image based on coordinates of the contour of the target on the reference gray image, a target area corresponding to same coordinates; obtain a to-be-complemented target area on the to-be-processed point cloud based on the target area; and perform a point complementing operation on the to-be-complemented target area to obtain the target point cloud.

In a possible implementation, the point complementing module 1202 is specifically configured to: obtain a hole image from the to-be-processed point cloud, where the hole image is used to describe a missing status of the to-be-processed point cloud; and perform convolution on the hole image and the target area to obtain the to-be-complemented target area.

The apparatus in this embodiment may be configured to perform the technical solution of the method embodiment shown in FIG. 3, an implementation principle and technical effect are similar, and details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A point cloud processing apparatus, comprising a laser control unit, a photon detector, and a signal processing unit, wherein
the laser control unit is configured to control a laser to be turned on or turned off;
the photon detector is configured to: separately collect an optical signal when the laser is turned on or turned off, and convert the optical signal into an electrical signal; and
the signal processing unit is configured to: obtain a to-be-processed point cloud and a reference gray image corresponding to a radar field of view, wherein the to-be-processed point cloud is synthesized by point clouds of a plurality of units, the reference gray image is synthesized by gray images of the plurality of units, a point cloud of a first unit is obtained based on the electrical signal obtained when the laser is turned on, a gray image of the first unit is obtained based on the electrical signal obtained when the laser is turned off, the point cloud of the first unit and the gray image of the first unit are alternately collected by a same sensor, and the first unit is any one of the plurality of units; obtain a contour of a target based on the reference gray image; and complement the to-be-processed point cloud based on the contour of the target to obtain a target point cloud.

2. A lidar point cloud processing method, comprising:
obtaining a to-be-processed point cloud and a reference gray image corresponding to a radar field of view, wherein the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units;
obtaining a contour of a target based on the reference gray image; and
complementing the to-be-processed point cloud based on the contour of the target to obtain a target point cloud.

3. The method according to claim 2, wherein the obtaining a to-be-processed point cloud and a reference gray image corresponding to a radar field of view comprises:
obtaining, for the plurality of units, the point clouds and the gray images unit by unit in a predetermined order;
synthesizing the point clouds of the plurality of units to obtain the to-be-processed point cloud; and
synthesizing the gray images of the plurality of units to obtain the reference gray image.

4. The method according to claim 3, wherein the obtaining, for the plurality of units, the point clouds and the gray images unit by unit in a predetermined order comprises:
when the first unit is processed, obtaining the gray image by using the sensor in a first collection cycle; and
obtaining the point cloud by using the sensor in a second collection cycle, wherein
the first collection cycle and the second collection cycle alternate with each other, a laser light is turned off in the first collection cycle, and the laser light is turned on in the second collection cycle.

5. The method according to claim 4, wherein the gray image is obtained based on received signals obtained by the sensor through a plurality of times of collection in the first collection cycle.

6. The method according to any one of claims 2 to 5, wherein the first unit comprises one or more points obtained through a single time of collection.

7. The method according to any one of claims 2 to 6, wherein the obtaining a contour of a target based on the reference gray image comprises:
detecting the target from the reference gray image based on a preset target of interest; and
performing target segmentation on the reference gray image to obtain the contour of the target.

8. The method according to claim 7, wherein before the detecting the target from the reference gray image based on a preset target of interest, the method further comprises:
performing enhancement processing on the reference gray image, wherein the enhancement processing comprises noising filtering and/or grayscale enhancement.

9. The method according to any one of claims 2 to 8, wherein the complementing the to-be-processed point cloud based on the contour of the target to obtain a target point cloud comprises:
obtaining a point cloud depth image based on the to-be-processed point cloud;
finding, from the point cloud depth image based on coordinates of the contour of the target on the reference gray image, a target area corresponding to same coordinates;
obtaining a to-be-complemented target area on the to-be-processed point cloud based on the target area; and
performing a point complementing operation on the to-be-complemented target area to obtain the target point cloud.

10. The method according to claim 9, wherein the obtaining a to-be-complemented target area on the to-be-processed point cloud based on the target area comprises:
obtaining a hole image from the to-be-processed point cloud, wherein the hole image is used to describe a missing status of the to-be-processed point cloud; and
performing convolution on the hole image and the target area to obtain the to-be-complemented target area.

11. A processing apparatus, comprising:
an obtaining module, configured to: obtain a to-be-processed point cloud and a reference gray image corresponding to a radar field of view, wherein the to-be-processed point cloud is synthesized by point clouds of a plurality of units, the reference gray image is synthesized by gray images of the plurality of units, a point cloud of a first unit is obtained under laser illumination, a gray image of the first unit is obtained under ambient light illumination, the point cloud of the first unit and the gray image of the first unit are alternately collected by a same sensor, and the first unit is any one of the plurality of units; and obtain a contour of a target based on the reference gray image; and
a point complementing module, configured to complement the to-be-processed point cloud based on the contour of the target to obtain a target point cloud.

12. The apparatus according to claim 11, wherein the obtaining module is specifically configured to: obtain, for the plurality of units, the point clouds and the gray images unit by unit in a predetermined order; synthesize the point clouds of the plurality of units to obtain the to-be-processed point cloud; and synthesize the gray images of the plurality of units to obtain the reference gray image.

13. The apparatus according to claim 12, wherein the obtaining module is specifically configured to: when the first unit is processed, obtain the gray image by using the sensor in a first collection cycle; and obtain the point cloud by using the sensor in a second collection cycle, wherein the first collection cycle and the second collection cycle alternate with each other, a laser light is turned off in the first collection cycle, and the laser light is turned on in the second collection cycle.

14. The apparatus according to claim 13, wherein the gray image is obtained based on received signals obtained by the sensor through a plurality of times of collection in the first collection cycle.

15. The apparatus according to any one of claims 11 to 14, wherein the first unit comprises one or more points obtained through a single time of collection.

16. The apparatus according to any one of claims 11 to 15, wherein the obtaining module is specifically configured to: detect the target from the reference gray image based on a preset target of interest; and perform target segmentation on the reference gray image to obtain the contour of the target.

17. The apparatus according to claim 16, wherein the obtaining module is further configured to: perform enhancement processing on the reference gray image, wherein the enhancement processing comprises noising filtering and/or grayscale enhancement.

18. The apparatus according to any one of claims 11 to 17, wherein the point complementing module is specifically configured to: obtain a point cloud depth image based on the to-be-processed point cloud; find, from the point cloud depth image based on coordinates of the contour of the target on the reference gray image, a target area corresponding to same coordinates; obtain a to-be-complemented target area on the to-be-processed point cloud based on the target area; and perform a point complementing operation on the to-be-complemented target area to obtain the target point cloud.

19. The apparatus according to claim 18, wherein the point complementing module is specifically configured to: obtain a hole image from the to-be-processed point cloud, wherein the hole image is used to describe a missing status of the to-be-processed point cloud; and perform convolution on the hole image and the target area to obtain the to-be-complemented target area.

20. A device, comprising:
one or more processors; and
a memory, configured to store one or more programs, wherein
when the one or more programs are executed by the one or more processors, the one or more processors are enabled to implement the method according to any one of claims 2 to 10.

21. A computer-readable storage medium, comprising a computer program, wherein when the computer program is executed on a computer, the computer is enabled to perform the method according to any one of claims 2 to 10.

22. A computer program product, wherein the computer program product comprises computer program code, and when the computer program code is run on a computer, the computer is enabled to perform the method according to any one of claims 2 to 10.

23. A chip, comprising a processor and a memory, wherein the memory is configured to store a computer program, and the processor is configured to: invoke and run the computer program stored in the memory, to perform the method according to any one of claims 2 to 10.
